# EUROPEAN PATENT APPLICATION

(11) **EP 3 168 757 A1**
(43) Date of publication of application: **17.05.2017**
(21) Application number: 15196568.8
(22) Date of filing: 26.11.2015
(51) Int. Cl.: G06F 17/30

(54) **WEB CONTENT EXTRACTION SYSTEM AND METHOD AND NON-TRANSITORY COMPUTER READABLE STORAGE MEDIUM**

(30) Priority: 11.11.2015 TW 104137213
(71) Applicant: Institute for Information Industry, Taipei 106 (TW)
(72) Inventor: LIN, Ming-Lu, 260 Yilan City (TW); LU, Hsin-Tse, 114 Taipei City (TW); CHEN, Yuan-Chang, 401 Taichung City (TW); LI, Yi-An, 234 New Taipei City (TW); YANG, Chao-Chin, 326 Taoyuan City (TW)
(74) Representative: Nederlandsch Octrooibureau

(57) **Abstract**

A web content extraction system includes a web structure analyzing module, a metadata determining module, a web correlation generating module and a storage path routing module. The web structure analyzing module is configured to divide a web content of a first web into a plurality of metadata and a plurality of ordinary data. The metadata determining module is configured to divide the plurality of metadata into a plurality of target metadata and a plurality of non-target metadata. The plurality of target metadata is corresponding to a second web. The web correlation generating module is configured to generate a correlation level information between the first web and the second web. The storage path routing module is configured to route a web content of the second web to a first storage path or a second storage path and route the ordinary data to the first storage path.

## Description

### BACKGROUND

### Technical Field

The present disclosure relates to a web technology. More particularly, the present disclosure relates to a web content extraction system, a web content method and a non-transitory computer readable storage medium.

### Description of Related Art

With the development of Internet, the information on the Internet has been a very important information source in our daily life. With the current web content extraction technology, all web content are extracted. Thus, the web content extracted does not satisfy user's demand and a lot of storage space and a long processing time are wasted.

### SUMMARY

One embodiment of the present disclosure is related to a web content extraction system. The web content extraction system includes a web structure analyzing module, a metadata determining module, a web correlation generating module and a storage path routing module. The web structure analyzing module is configured to divide a web content of a first web into a plurality of metadata and a plurality of ordinary data according to a web structure standard the first web satisfies. The metadata determining module is configured to divide the plurality of metadata into a plurality of target metadata and a plurality of non-target metadata according to a user setting condition. The plurality of target metadata is corresponding to a second web. The web correlation generating module is configured to generate a correlation level information between the first web and the second web. The storage path routing module is configured to route a web content of the second web to a first storage path or a second storage path according to the correlation level information and route the plurality of ordinary data to the first storage path.

Another embodiment of the present disclosure is related to a web content extraction method. The web content extraction method includes: dividing a web content of a first web into a plurality of metadata and a plurality of ordinary data according to a web structure standard the first web satisfies; dividing the plurality of metadata into a plurality of target metadata and a plurality of non-target metadata according to a user setting condition, the plurality of target metadata being corresponding to a second web; generating a correlation level information between the first web and the second web; and routing a web content of the second web to a first storage path or a second storage path according to the correlation level information and routing the plurality of ordinary data to the first storage path.

Yet another embodiment of the present disclosure is related to a non-transitory computer readable storage medium storing a computer program. The computer program is configured to execute a web content extraction method. The web content extraction method includes: dividing a web content of a first web into a plurality of metadata and a plurality of ordinary data according to a web structure standard the first web satisfies; dividing the plurality of metadata into a plurality of target metadata and a plurality of non-target metadata according to a user setting condition, the plurality of target metadata being corresponding to a second web; generating a correlation level information between the first web and the second web; and routing a web content of the second web to a first storage path or a second storage path according to the correlation level information and routing the plurality of ordinary data to the first storage path.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a schematic diagram illustrating a web content extraction system according to one embodiment of the present disclosure;
Fig. 2 is a flow diagram illustrating a web content extraction method according to one embodiment of this disclosure;
Fig. 3 is a schematic diagram illustrating a web structure analyzing module of Fig. 1;
Fig. 4 is a schematic diagram illustrating a metadata and an ordinary data according to one embodiment of this disclosure; and
Fig. 5 is a schematic diagram illustrating a metadata determining module of Fig. 1.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. The embodiments below are described in detail with the accompanying drawings, but the examples provided are not intended to limit the scope of the disclosure covered by the description. The structure and operation are not intended to limit the execution order. Any structure regrouped by elements, which has an equal effect, is covered by the scope of the present disclosure. Moreover, the drawings are for the purpose of illustration only, and are not in accordance with the size of the original drawing. The components in description are described with the same number to understand.

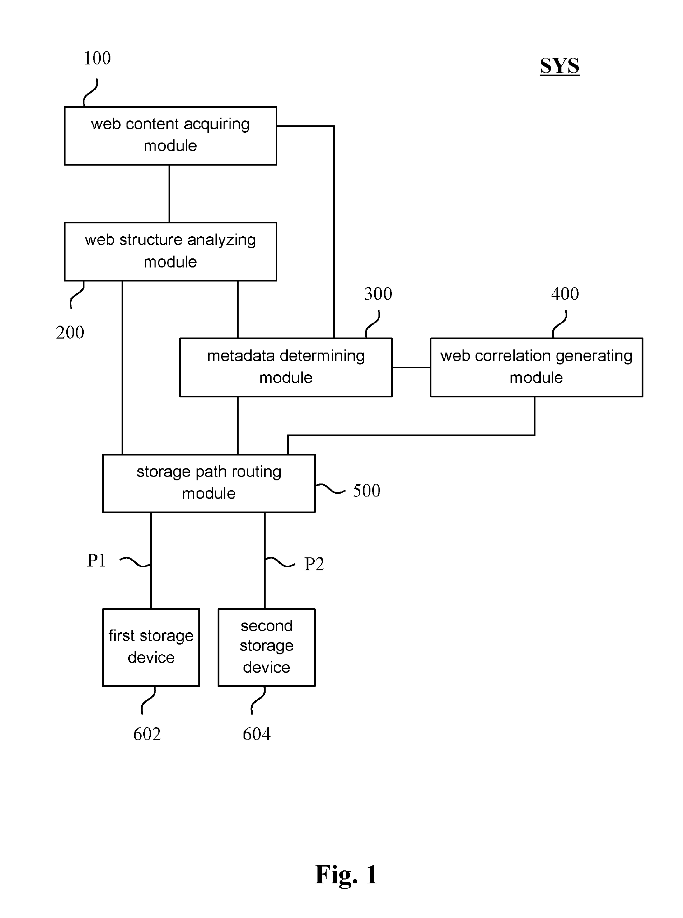

Fig. 1 is a schematic diagram illustrating the web content extraction system SYS according to one embodiment of the present disclosure. As illustrated in Fig.1, the web content extraction system SYS includes a web structure analyzing module 200, a metadata determining module 300, a web correlation generating module 400 and a storage path routing module 500. The metadata determining module 300 is coupled to the web structure analyzing module 200. The web correlation generating module 400 is coupled to the metadata determining module 300. The storage path routing module 500 is coupled to the web correlation generating module 400, the metadata determining module 300 and the web structure analyzing module 200.

In some embodiments, the web content extraction system SYS further includes a web content acquiring module 100. The web content acquiring module 100 is coupled to the web structure analyzing module 200 and the metadata determining module 300. In some embodiments, the web content extraction system SYS further includes a first storage device 602 and a second storage device 604. The storage path routing module 500 is coupled to the first storage device 602 through a first storage path P1. The storage path routing module 500 is coupled to the second storage device 604 through a second storage path P2. In some embodiments, an operation speed of the second storage device 604 is faster than an operation speed of the first storage device 602. For instance, the first storage device 602 may be a hard disk with a slower operation speed, and the second storage device 604 may be another hard disk with a faster operation speed.

As used herein, "coupled" may refer to two or more elements are in "direct" physical or electrical contact made, or "indirectly", as a mutual entity or electrical contact, and may also refer to two or more elements are operating or action.

Moreover, as used herein with respect to "first," "second," etc., these terms do no indicate a special order or have any type of special meaning, and instead are simply used to distinguish the operation described in the same terms or elements of it.

As mentioned above, the web structure analyzing module 200, the metadata determining module 300, the web correlation generating module 400 and the storage path routing module 500 may be implemented in terms of software, hardware and/or firmware. For instance, if the execution speed and accuracy have priority, the above-mentioned modules may be implemented in terms of hardware and/or firmware. If the design flexibility has higher priority, then the above-mentioned modules may be implemented in terms of software. Furthermore, the above-mentioned modules may be implemented in terms of software, hardware and firmware in the same time. It is noted that the foregoing examples or alternates should be treated equally, and the present disclosure is not limited to these examples or alternates. Anyone who is skilled in the prior art can make modification to these examples or alternates in flexible way if necessary.

In some embodiments, the web structure analyzing module 200, the metadata determining module 300, the web correlation generating module 400 and the storage path routing module 500 may be integrated into a processing device. The processing device includes a CPU, a control element, a micro processor or other hardware element being able to execute instructions.

In other embodiments, the web structure analyzing module 200, the metadata determining module 300, the web correlation generating module 400 and the storage path routing module 500 may be implemented as a computer program and stored in a storing device. The storing device includes non-volatile computer-readable recording medium or other device with storing function. The computer program includes a plurality of program instructions. The CPU may execute the program instructions to perform functions of each module.

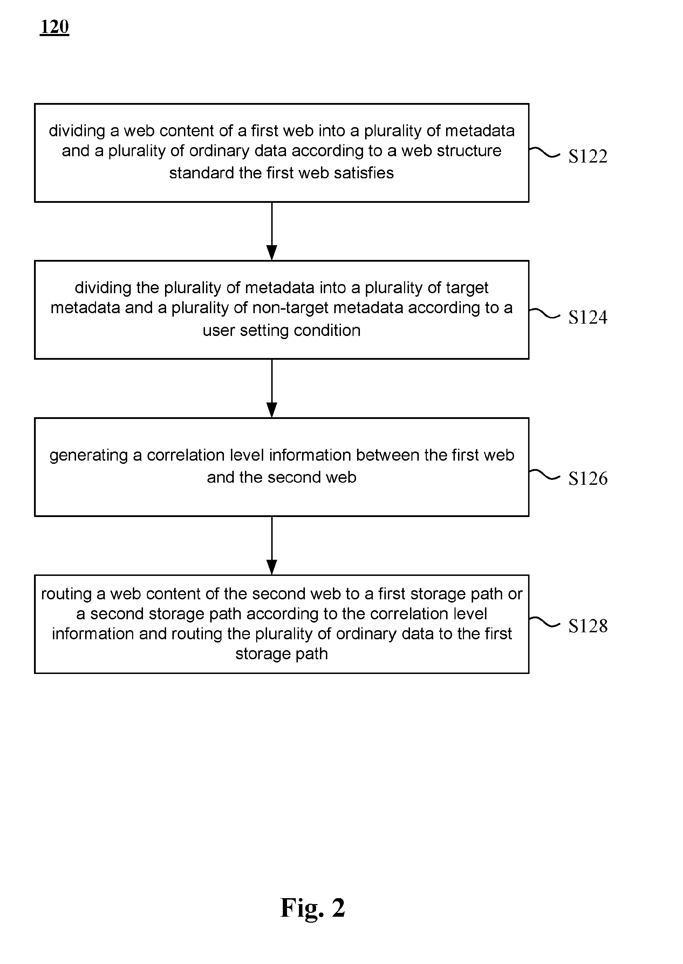

Fig. 2 is a flow diagram illustrating the web content extraction method 120 according to one embodiment of this disclosure. As illustrated in Fig. 2, the web content extraction method 120 includes step S122, step S124, step S126 and step S128. In some embodiments, the web content extraction method 120 in Fig. 2 may be implemented in the web content extraction system SYS in Fig. 1.

In some embodiments, when a user inputs a uniform resource locator (URL) of a first web into the web content extraction system SYS, the web content acquiring module 100 may be configured to acquire a web content of the first web. In some embodiments, the web content acquiring module 100 is a crawl program. The crawl program is configured to crawl a web source code of a web. In other words, the web content of the first web may be a web source code of the first web. The web source code is written by a web structure standard. The web structure standard may be Microformats, RDFa, Microdata or other various web structure standards. Compared to Microformats and RDFa, Microdata is more simple and easier. Generally, a web structure standard may be configured to explain a web content with article topic. As long as the web content mentions an article title, an article content, a publishing time, a publishing author etc, they may be identified by tags.

In step S122, the web structure analyzing module 200 divides the web content of the first web into a plurality of metadata and a plurality of ordinary data according to the web structure standard which the first web satisfies. In detail, the web structure analyzing module 200 is configured to receive the source code of the first web and determine the source code of the first web is written by which web structure standard. For instance, It is assumed that the first web is a news webpage of Yahoo website. The web content acquiring module 100 can crawl the source code of Yahoo news. Then, the web structure analyzing module 200 can receive the source code of the Yahoo news from the web content acquiring module 100. Since the source code of the Yahoo news is written by Microdata, the source code of the Yahoo news includes a meta-tag "itemprop" or other meta-tags belonging to Microdata. The web structure analyzing module 200 may determine Yahoo news is written by Microdata according to the "itemprop" in the source code of the Yahoo news. Then, the web structure analyzing module 200 can divide a plurality of string in the source code of the first web into a plurality of metadata and a plurality of ordinary data. The plurality of metadata are a plurality of strings with the meta-tags of Microdata, and the ordinary data are a plurality of strings without the meta-tags of Microdata.

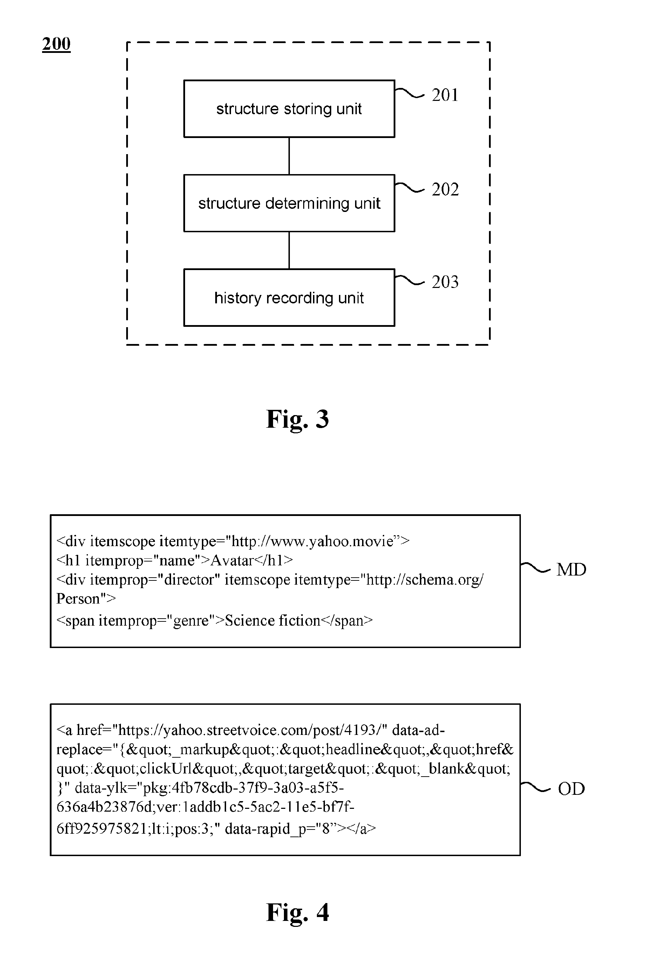

Fig. 3 is a schematic diagram illustrating the web structure analyzing module 200 of Fig. 1. As illustrated in Fig. 3, in some embodiments, the web structure analyzing module 200 includes a structure storing unit 201, a structure determining unit 202 and a history recording unit 203. The structure determining unit 202 is coupled to the structure storing unit 201 and the history recording unit 203.

The structure storing unit 201 may be configured to store a plurality of web structure standards, such as, Microformats, RDFa, Microdata or other various web structure standards. The structure determining unit 202 may be configured to receive the source code of the first web, and compare the source code of the first web with the web structure standards in the structure storing unit 201 to determine which web structure standard the source code of the first web is written by. After the structure determining unit 202 determines the web structure standard of the source code of the first web, a corresponding relationship information between the first web and the corresponding web structure standard may be stored into the history recording unit 203. For instance, a corresponding relationship information "Yahoo news-Microdata" may be stored into a corresponding relationship information table in the history recording unit 203. The corresponding relationship information table is such as table 1 as below.

| URL | Web structure standard |
|---|---|
| http://tw.news.yahoo.com | Microdata |
| http://www.ipeen.com.tw | Microdata |
| http://www.bbc.co.uk/music | RDFa |
| http://www.oreilly.com | RDFa |

Thus, if the Yahoo news is input into the web content extraction system SYS again in the future, the structure determining unit 202 will directly determine that the Yahoo news is written by Microdata according to the corresponding relationship information table in the history recording unit 203, thereby saving a processing time of the web structure analyzing module 200.

Fig. 4 is a schematic diagram illustrating a metadata MD and an ordinary data OD according to one embodiment of this disclosure. As illustrated in Fig. 3 and Fig. 4, after the structure determining unit 202 determines the Yahoo news satisfies Microdata, the structure determining unit 202 will divide the source code of Yahoo news into the metadata MD and the ordinary data OD in Fig.4. For a purpose of simplicity, only a part of source code of the first web is illustrated in Fig. 4. In detail, the strings with the meta-tags of Microdata are referred as the metadata MD and transmitted to the metadata determining module 300. The strings without the meta-tags of Microdata are referred as the ordinary data OD and directly transmitted to the storage path routing module 500.

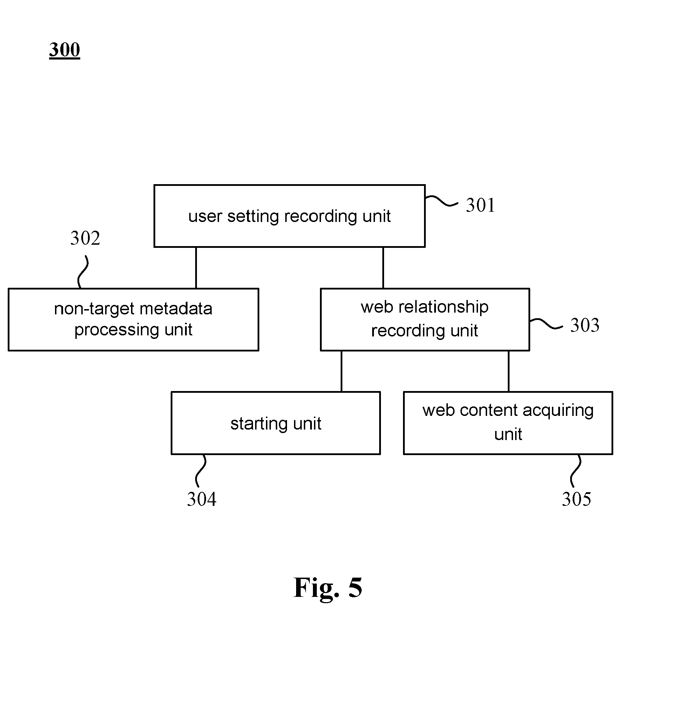

Fig. 5 is a schematic diagram illustrating the metadata determining module 300 of Fig. 1. As illustrated in Fig. 5, the metadata determining module 300 includes a user setting recording unit 301, a non-target metadata processing unit 302, a web relationship recording unit 303, a starting unit 304 and a web content acquiring unit 305. The user setting recording unit 301 is coupled to the non-target metadata processing unit 302 and the web relationship recording unit 303. The web relationship recording unit 303 is coupled to the starting unit 304 and the web content acquiring unit 305.

In step S124, after the metadata determining module 300 receives the metadata MD, the metadata determining module 300 will divide the metadata MD into a plurality of target metadata and a plurality of non-target metadata according to a user setting condition. In detail, the user may set the user setting condition according to the user's demand. The user setting condition may be stored in the user setting recording unit 301. In some embodiments, the user setting condition may be meta-tags, a level number or a combination thereof. For instance, the meta-tags of Microdata include itemprop="content", itemprop="image", itemprop="type" and itemprop="date" etc. If the user thinks information about "content" is more important and the user only wants to extract a web content of a URL in the first web, the user may set the user setting condition as "one layer; itemprop=content". The URL in the first web may be linked to a second web. At this time, the web relationship recording unit 303 will refer the strings having itemprop="content" and having URL as the target metadata. The target metadata will be transmitted to the web correlation generating module 400. On the contrary, the web relationship recording unit 303 will refer the strings without itemprop="content" as the non-target metadata. The non-target metadata will be transmitted to the storage path routing module 500 through the non-target metadata processing unit 302.

At this time, the web relationship recording unit 303 will refer the second web as a son web of the first web, and refer the first web as a father web of the second web. In other words, the web relationship recording unit 303 may be configured to record a web relationship information between the first web and the second web. It is noted that there may be a plurality of second webs. In other words, a plurality of strings in the source code of the first web include URL and include itemprop="content". Then, the web content acquiring unit 305 may extract a web content of the second web according to the web relationship information and transmit the web content of the second web to the web correlation generating module 400.

In some embodiments, if the user setting condition is set as "two layers; itemprop=content", the starting unit 304 will start the web content acquiring module 100 again to extract a source code of the second web. Then, the web structure analyzing module 200 will determine which web structure standard the source code of the second web satisfies, to generate a plurality of metadata and a plurality of ordinary data of the second web. Then, the metadata determining module 300 will refer a plurality of strings with itemprop="content" and including URL corresponding to a plurality of third web as a plurality of target metadata, and transmits the plurality of target metadata to the web correlation generating module 400. At this time, the web relationship recording unit 303 will refer the third webs as son webs of the second web, and the second web is a father web of the third webs.

In step S126, the web correlation generating module 400 is configured to generate a correlation level information. In detail, in some embodiments, the web correlation generating module 400 is configured to determine a correlation level between the first web and the second web according to the web relationship information generated by the web relationship recording unit 303 and a word comparing algorithm. In detail, after the web correlation generating module 400 receives the web content of the second web, the web correlation generating module 400 may use the word comparing algorithm to determine the correlation level between the second web and the first web. The word comparing algorithm may be, for example, term frequency-inverse document frequency (TD-IDF), but not limited thereto. If the correlation level between the second web and the first web is higher, the second web is more conforming to information that the user wants to get. On the contrary, if the correlation level between the second web and the first web is lower, the second web is less conforming to information that the user wants to get. For instance, if the first web is a web about a food, and the second web is a blog about the food. At this time, there will be lots of words about the food in the second web. Consequently, the web correlation generating module 400 will determine the correlation level between the second web and the first web is high. However, if a second web is a web about a shopping website, there will be less words about the food in the second web. Consequently, the web correlation generating module 400 will determine the correlation level between the second web and the first web is low.

In step S128, the storage path routing module 500 will route a web content of the second web to the first storage path P1 or the second storage path P2 according to the correlation level information between the first web and the second web. In detail, if the correlation level information between the first web and the second web is high, the storage path routing module 500 will refer the second web as high quality data and route the web content of the second web to the second storage path P2 to store the web content of the second web into the second storage device 604 whose operation speed is faster. However, if the correlation level information between the first web and the second web is low, the storage path routing module 500 will refer the second web as low quality data and route the web content of the second web to the first storage path P1 to store the web content of the second web into the first storage device 602 whose operation speed is lower.

Moreover, the storage path routing module 500 can refer the ordinary data OD from the web structure analyzing module 200 as low quality data and route the ordinary data OD to the first storage path P1 to store the ordinary data OD into the first storage device 602 whose operation speed is lower. Moreover, the storage path routing module 500 can refer non-target metadata from the metadata determining module 300 as high quality data and route the non-target metadata to the second storage path P2 to store the non-target metadata into the second storage device 604 whose operation speed is higher.

As the above embodiments, the web content extraction system and method of this disclosure crawl a web content of a specific URL in an original web according to a web structure standard of the original web and a user setting condition. A web content of other URL is not crawled. Thus, the web content which satisfies user's demand can be extracted, and the web content which does not conform to user's demand will not be extracted, thereby saving time of processing data, saving storage space and extracting the web which satisfies user's demand.

## Claims

1. A web content extraction system (SYS), **characterized by** comprising:
a web structure analyzing module (200) configured to divide a web content of a first web into a plurality of metadata (MD) and a plurality of ordinary data (OD) according to a web structure standard the first web satisfies;
a metadata determining module (300) configured to divide the plurality of metadata (MD) into a plurality of target metadata and a plurality of non-target metadata according to a user setting condition, the plurality of target metadata being corresponding to a second web;
a web correlation generating module (400) configured to generate a correlation level information between the first web and the second web; and
a storage path routing module (500) configured to route a web content of the second web to a first storage path (P1) or a second storage path (P2) according to the correlation level information and route the plurality of ordinary data (OD) to the first storage path (P1).

2. The web content extraction system (SYS) of claim 1, further **characterized by** comprising:
a web content acquiring module (100) configured to acquire the web content of the first web, **characterized in that** the web content of the first web comprises a web source code written by the web structure standard.

3. The web content extraction system (SYS) of claim 2, **characterized in that** the web structure analyzing module comprises:
a structure storing unit (201) configured to store a plurality of web structure standards;
a structure determining unit (202) configured to determine whether the first web satisfies one of the web structure standards or not according to the plurality of web structure standards; and
a history recording unit (203) configured to record a corresponding relationship information between the first web and the web structure standard.

4. The web content extraction system (SYS) of claim 1, **characterized in that** the metadata determining module comprises:
a user setting recording unit (301) configured to record the user setting condition,
**characterized in that** the user setting condition comprises a meta-tag or a level number.

5. The web content extraction system (SYS) of claim 1, **characterized in that** the metadata determining module comprises:
a web relationship recording unit (303) configured to record a web relationship information between the first web and the second web.

6. The web content extraction system (SYS) of claim 5, **characterized in that** the web correlation generating module (400) is configured to generate the correlation level information between the first web and the second web according to the web relationship information and a word comparing algorithm.

7. The web content extraction system (SYS) of claim 2, **characterized in that** the metadata determining module comprises:
a starting unit (304) configured to start the web content acquiring module (100) again,
such that the web content acquiring module (100) acquires a content source code of the second web.

8. The web content extraction system (SYS) of claim 1, **characterized in that** the storage path routing module (500) is configured to route the plurality of non-target metadata to the second storage path (P2), **characterized in that** the first storage path (P1) is connected to a first storage device (602), the second storage path (P2) is connected to a second storage device (604), and an operation speed of the second storage device (604) is faster than an operation speed of the first storage device (602).

9. A web content extraction method (120), **characterized by** comprising:
dividing a web content of a first web into a plurality of metadata (MD) and a plurality of ordinary data (OD) according to a web structure standard the first web satisfies;
dividing the plurality of metadata (MD) into a plurality of target metadata and a plurality of non-target metadata according to a user setting condition, the plurality of target metadata being corresponding to a second web;
generating a correlation level information between the first web and the second web; and
routing a web content of the second web to a first storage path (P1) or a second storage path (P2) according to the correlation level information and routing the plurality of ordinary data (OD) to the first storage path (P1).

10. The web content extraction method of claim 9, **characterized in that** the web content of the first web comprises a web source code written by the web structure standard.

11. The web content extraction method of claim 9, **characterized in that** the user setting condition comprises a meta-tag or a level number.

12. The web content extraction method of claim 9, further **characterized by** comprising:
recording a web relationship information between the first web and the second web.

13. The web content extraction method of claim 12, **characterized in that** the step of generating the correlation level information comprises:
generating the correlation level information between the first web and the second web according to the web relationship information and a word comparing algorithm.

14. The web content extraction method of claim 9, further **characterized by** comprising:
routing the plurality of non-target metadata to the second storage path (P2),
**characterized in that** the first storage path (P1) is connected to a first storage device (602), the second storage path (P2) is connected to a second storage device (604), and an operation speed of the second storage device (604) is faster than an operation speed of the first storage device (602).

15. A non-transitory computer readable storage medium storing a computer program, **characterized in that** the computer program is configured to execute a web content extraction method (120), and the web content extraction method comprises:
dividing a web content of a first web into a plurality of metadata (MD) and a plurality of ordinary data (OD) according to a web structure standard the first web satisfies;
dividing the plurality of metadata (MD) into a plurality of target metadata and a plurality of non-target metadata according to a user setting condition, the plurality of target metadata being corresponding to a second web;
generating a correlation level information between the first web and the second web; and
routing a web content of the second web to a first storage path (P1) or a second storage path (P2) according to the correlation level information and routing the plurality of ordinary data (OD) to the first storage path (P1).
